**Europäisches Patentamt**

**European Patent Office**

**Office européen des brevets**

(19)

(11) Veröffentlichungsnummer: **0 005 700**
**B1**

(12)

# EUROPÄISCHE PATENTSCHRIFT

(45) Veröffentlichungstag der Patentschrift:
07.01.81

(51) Int. Cl.³: **B 60 T 8/04**

(21) Anmeldenummer: **78100085.6**

(22) Anmeldetag: **05.06.78**

(54) Vorrichtung zum Verhindern des Blockierens von Fahrzeugrädern beim Bremsen.

(43) Veröffentlichungstag der Anmeldung:
**12.12.79 Patentblatt 79/25**

(45) Bekanntmachung des Hinweises auf die Patenterteilung:
**07.01.81 Patentblatt 81/1**

(84) Benannte Vertragsstaaten:
**DE FR GB**

(56) Entgegenhaltungen:
**DE-A-2 427 075**
**FR-A-2 240 848**
**GB-A-2 010 998**

(73) Patentinhaber: **Daimler Benz Aktiengesellschaft,
Postfach 202, D-7000 Stuttgart 60 (DE)**

(72) Erfinder: **Wulf, Helmut, Ernst-Kirchnerstrasse 35/3,
D-7302 Ostfildern (DE)**
Erfinder: **Sommerer, Winfried, Rostocker Strasse 53/202,
D-7000 Stuttgart 50 (DE)**

## Vorrichtung zum Verhindern des Blockierens von Fahrzeugrädern beim Bremsen

Die Erfindung bezieht sich auf eine Vorrichtung zum Verhindern des Blockierens von Fahrzeugrädern beim Bremsen, insbesondere von Kraftfahrzeugen, deren Räder zum Ermitteln des Drehzustandes jeweils ein Sensor zugeordnet ist, der durch Verknüpfung in einer Regeltechnik beim Erreichen vorgegebener Schwellwerte zum Steuern der Bremskraft Impulse liefert, die zugleich ein dosiertes Zuführen eines Schmiermittels aus körperlich festen, in ihrer Achsrichtung bewegbaren Schmiermittelstiften veranlassen.

Es ist bereits eine ähnliche Vorrichtung vorgeschlagen worden, die die Aufgabe der Erfindung mit anderen Mitteln löst und die in der älteren deutschen Patentanmeldung P2758059.2 beschrieben ist. Bei dieser älteren Anmeldung werden die Schmiermittelstifte durch einen Elektromagneten bewegt, wobei diese Bewegung auch durch Impulse ausgelöst wird.

Aufgabe der Erfindung ist es, auch hier die Schmiermittelstifte so einzusetzen, dass bei sparsamem Verbrauch trotzdem die erwünschte Wirkung eintritt und zur Bewegung der Schmiermitelstifte Mittel zu verwenden, die sich bei dem gerade verwendeten Fahrzeug leicht und vorteilhaft einsetzen lassen. Das bedeutet, dass das Verhindern des Blockierens der Fahrzeugräder auch hier mit einem ähnlichen Prinzip, aber mit geringem Aufwand und anderen Mitteln durchgeführt werden soll.

Diese Aufgabe wird durch die Erfindung dadurch gelöst, dass die Schmiermittelstifte in Bohrungen des Bremsbelages, vorzugsweise an seiner Einlaufseite, und des zugehörigen Bremsbelagträgers geführt sind und nach Auslösen eines Impulses durch ein diesem entsprechend wirkendes Druckmedium gegen die Bremsscheibe gedrückt werden. Die Führung der Schmiermittelstifte im Bremsbelag und im Bremsbelagträger geschieht dazu, dass ein wenig abgenützter Schmiermittelstift bei stark abgenütztem Bremsbelag ausserhalb von diesem noch eine ausreichende Ausweichmöglichkeit beim Zurückgehen von der Bremsscheibe weg hat und trotzdem noch ausreichend gut geführt ist. Ausserdem soll durch die Anordnung der Schmiermittelstifte an der Einlaufseite des Bremsbelages verhindert werden, dass bei Betätigung derselben Quietschgeräusche entstehen.

Besonders zweckmässig ist es, wenn die Schmiermittelstifte vorzugsweise in zwei Reihen angeordnet sind, zwischen denen die Zuflussbohrung für das Druckmedium so verläuft, dass sie alle Bohrungen für die Schmiermittelstifte anschneidet. Hierdurch wird eine leichte und unaufwendige Herstellung der betreffenden Zuführkanäle gewährleistet.

Zur Betätigung der Antiblockiereinrichtung ist nun vorgesehen, dass ein von einem Sensor ausgelöster Impuls in einer Regeltechnik ein Steuerventil in einem Pneumatiksystem öffnet, das über Pneumatikleitungen und die Zuflussbohrungen im Bremsbelagträger die von der Bremsscheibe abgekehrte Stirnseite der Schmiermittelstifte beaufschlagt. Weiterhin kann vorgesehen werden, dass an der von der Bremsscheibe abgekehrten Stirnseite eines Schmiermittelstiftes eine durch radial von ihr ausgehende Zunge federnde Scheibe angeordnet ist, die mit Vorspannung (statt mit Spiel wie der Schmiermittelstift selbst) in der Bohrung federnd nachgiebig anliegt. Dies hat die Wirkung, dass bei Beaufschlagung mit dem Druckmedium der Schmiermittelstift und ihm schwergängiger nachfolgend die Scheibe gegen die Bremsscheibe gedrückt werden. Demzufolge hebt die beim Zurücknehmen des Druckes zurückfedernde Scheibe den Schmiermittelstift von der Bremsscheibe wieder ab.

Die federnde Scheibe kann nun in ihrem Zentrum eine Ausnehmung aufweisen, mit sich radial innerhalb der Zungen erstreckenden, spitz zulaufenden Fortsetzungen, in die ein am Schmiermittelstift angeordneter taillierter Fortsatz einknöpfbar ist.

Die Erfindung wird anhand eines in der Zeichnung dargestellten Ausführungsbeispiels in der folgenden Beschreibung näher erläutert, der auch weitere Einzelheiten des Gegenstandes der Erfindung entnommen werden können. Es zeigen:

Fig. 1 einen Schnitt durch eine Bremsscheibe mit einer daran angeordneten, ebenfalls geschnittenen Scheibenbremse, welche die erfindungsgemässe Vorrichtung aufweist,

Fig. 2 einen Schnitt durch diese Vorrichtung nach der Linie II-II in Fig. 1,

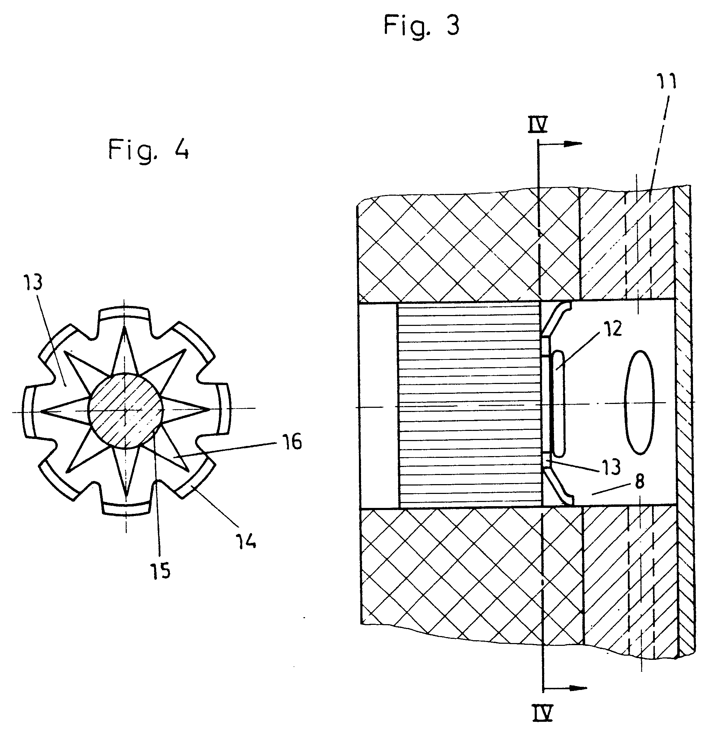

Fig. 3 in vergrössertem Massstabe eine Einzelheit bei III in Fig. 1 ohne Bremsbelagträger,

Fig. 4 einen Schnitt nach der Linie IV-IV in Fig. 3, jedoch ohne Bremsbelag und Bremsbelagträger.

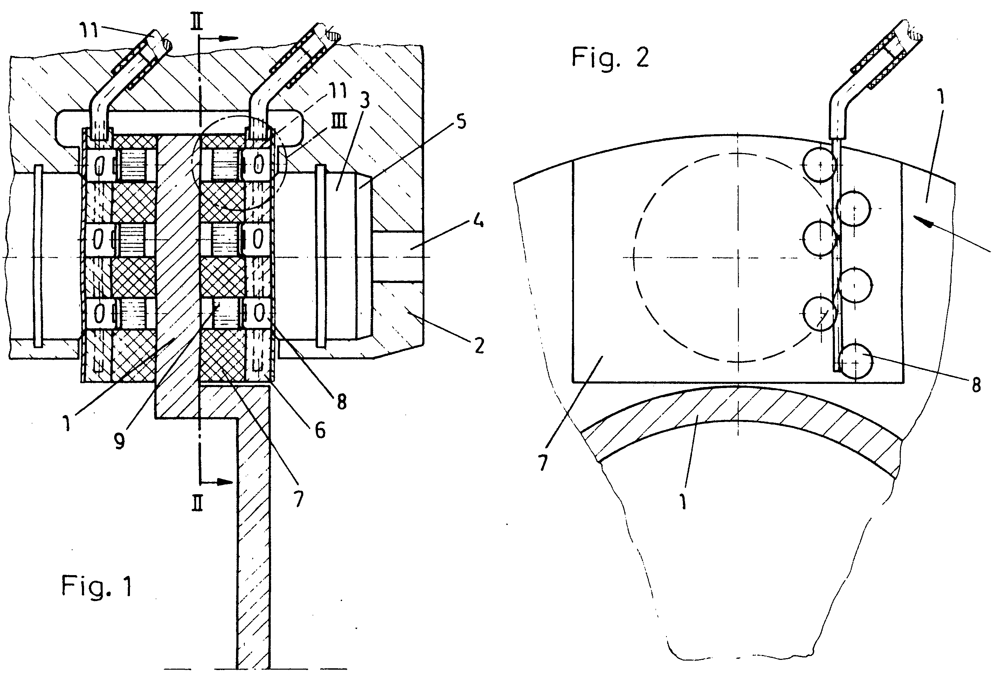

Der in Fig. 1 dargestellten Bremsscheibe 1 ist in üblicher Weise eine Scheibenbremse 2 zugeordnet, die in bekannter Weise mit einem Kolben 3 versehen ist. Durch den Anschluss 4 kann dem Zylinder 5 Druck durch eine Bremsflüssigkeit zugeführt werden, wodurch der Kolben 3 in Richtung auf die Bremsscheibe 1 zu vorbewegt wird. Dabei nimmt er den Bremsbelagträger 6 und somit zugleich den Bremsbelag 7 mit und presst letzteren gegen die Bremsscheibe 1.

An der Einlaufseite des Bremsbelags 7 sind mehrere Bohrungen 8, nämlich sechs Bohrungen in zwei Reihen, im Bremsbelag 7 angeordnet. Diese Bohrungen 8 erstrecken sich bis in den Bremsbelagträger 6 hinein. In diese Bohrungen 8 sind Schmiermittelstifte 9 eingesteckt, die eine Ausweichmöglichkeit in den Bremsbelagträger 6 haben, wenn bei wenig abgenütztem Schmiermittelstift die Dicke des Bremsbelags 7 schon in grösserem Mass abgenommen hat. Ein Druckmedium wird nun den Bohrungen 8 durch eine Zuflussleitung 11 zugeführt, die so zwischen die Bohrungen 8 gelegt ist, dass sie alle Bohrungen anschneidet (Fig. 2).

Die von der Bremsscheibe 1 abgewandte Seite der Schmiermittelstifte 9 trägt an einem taillierten Fortsatz 12 eine Scheibe 13, die durch radial von ihr ausgehende Zungen 14 federnde Eigenschaften aufweist. Die federnde Scheibe 13 weist in ihrem Zentrum eine Ausnehmung 15 auf, von der wiederum spitz zulaufende Fortsetzungen 16 ausgehen, die sich innerhalb der Zungen 14 erstrecken. In diese Ausnehmung mit ihren Fortsetzungen lässt sich der am Schmiermittelstift 9 angeordnete taillierte Fortsatz 12 einknüpfen.

Ein von einem Sensor auf eine Regeleinrichtung übertragenes Signal lässt von dieser einen Impuls ausgehen, der ein Steuerventil in einem Pneumatiksystem eröffnet. Von diesem wird der Zuflussleitung 11 ein Druck zugeführt, der die Schmiermittelstifte 9 in den Bohrungen 8 beaufschlagt. Dadurch werden die Schmiermittelstifte 9 gegen die Bremsscheibe 1 gepresst. Sie unterliegen einem Abrieb, der als Schmiermittel zwischen den Bremsbelag 7 und die Bremsscheibe 1 eindringt und dadurch die Reibverhältnisse zwischen diesen beiden Teilen ändert.

Da die Zungen 14 der Scheiben 13 in den Bohrungen 8 nicht wie die Schmiermittelstifte 9 mit Spiel, sondern unter Vorspannung anliegen, folgt die federnde Scheibe 13 schwergängiger dem Schmiermittelstift 9 und unter Spannung. Deshalb hebt die federnde Scheibe 13 nach der Verringerung des Druckes in den Bohrungen 8 und in der Zuflussleitung 11 den Schmiermittelstift 9 von der Bremsscheibe 1 ab. Dadurch werden die Schmiermittelstifte 9 nur abgerieben, wenn dies nötig und durch den von der Regeleinrichtung ausgegebenen Impuls gegeben ist. Dieser Impuls wird aber nur ausgelöst, wenn ein Rad zu blockieren droht, so dass durch die Schmierung der Bremsscheibe das Blockieren des Rades vermieden wird.

**Patentansprüche**

1. Vorrichtung zum Verhindern des Blockierens von Fahrzeugrädern beim Bremsen, insbesondere von Kraftfahrzeugen, deren Rädern zum Ermitteln des Drehzustandes jeweils ein Sensor zugeordnet ist, der durch Verknüpfung in einer Regeltechnik beim Erreichen vorgegebener Schwellwerte zum Steuern der Bremskraft Impulse liefert, die zugleich ein dosiertes Zuführen eines Schmiermittels aus körperlich festen, in ihrer Achsrichtung bewegbaren Schmiermittelstiften veranlassen, dadurch gekennzeichnet, dass die Schmiermittelstifte (9) in Bohrungen (8) des Bremsbelages (7), vorzugsweise an seiner Einlaufseite, und des zugehörigen Bremsbelagträgers (6) geführt sind und nach Auslösen eines Impulses durch ein diesem entsprechend wirkendes Druckmedium gegen die Bremsscheibe (1) gedrückt werden.

2. Vorrichtung nach Anspruch 1, dadurch gekennzeichnet, dass die Schmiermittelstifte (9) vorzugsweise in zwei Reihen angeordnet sind, zwischen denen eine Zuflussleitung (11) für das Druckmedium so verläuft, dass sie alle Bohrungen (8) für die Schmiermittelstifte (9) anschneidet.

3. Vorrichtung nach Anspruch 1 oder 2, dadurch gekennzeichnet, dass ein Impuls ein Steuerventil in einem Pneumatiksystem öffnet, das über Pneumatikleitungen und Zuflussleitungen (11) im Bremsbelagträger (6) die von der Bremsscheibe (1) abgekehrte Stirnseite der Schmiermittelstifte (9) beaufschlagt.

4. Vorrichtung nach Anspruch 3, dadurch gekennzeichnet, dass an der von der Bremsscheibe (1) abgekehrten Stirnseite eines Schmiermittelstiftes (9) eine durch radial von ihr ausgehende Zunge (14) federnde Scheibe (13) angeordnet ist, deren Zungen (14) mit Vorspannung statt mit Spiel wie der Schmiermittelstift (9) selbst in der Bohrung (8) federnd nachgiebig anliegen.

5. Vorrichtung nach Anspruch 4, dadurch gekennzeichnet, dass die federnde Scheibe (13) in ihrem Zentrum eine Ausnehmung (15) mit sich radial innerhalb der Zungen (14) erstreckenden, spitz zulaufenden Fortsetzungen (16) aufweist, in die ein am Schmiermittelstift (9) angeordneter taillierter Fortsatz (12) einknöpfbar ist.

**Patent claims**

1. An arrangement for preventing vehiclewheel lock on braking, particulary but not exclusively on motor vehicles, of the kind in which a rotation sensor is provided for each wheel and pulses from the sensors, unified in a control system, are used to control the braking force when predetermined threshold values are reached, and at the same time to cause a metered supply of a lubricant to be delivered from solid lubricant pins being movable in their axial direction, wherein the lubricant pins (9) are guided in bores (8) in the brake lining (7), preferably at its leading edge, and in the corresponding brake-lining carrier (6) and, after release of a pulse, are depressed against the brake disc (1) by a pressure medium acting in accordance with this pulse.

2. An arrangement according to claim 1, wherein the lubricant pins (9) are preferably positioned in two rows between which a supply line (11) for the pressure medium is routed so as to connect up with each of the bores (8) for the lubricant pins (9).

3. An arrangement according to claims 1 or 2, wherein a pulse opens a control valve in a pneumatic system shich by means of pneumatic lines and supply lines (11) in the brake-lining carrier (6) applies pressure to the ends of the lubricant pins (9) facing away from the brake disc (1).

4. An arrangement according to claim 3, wherein a disc (13) flexing on tongues (14) arranged radially around its centre is located on the end of the lubricant pin (9) facing away from the brake disc (1), these tongues (14) fitting in the bore (8) so as to be flexibly sprung with pretension, instead of having play like the lubricant pin (9) itself.

5. An arrangement according to claim 4, wherein the centre of the flexible disc (13) has a cutout (15) with tapering extensions (16) stretching out radially within the tongues (14) and allowing a waisted projection (12) located on the lubricant pin (9) to be clipped in.

**Revendications**

1. Dispositif destiné à empêcher, lors du freinage, le blocage des roues des véhicules, en particulier des véhicules à moteur, dispositif prévoyant le raccordement de chaque roue à un capteur détectant son état de rotation et émettant des impulsions qui, après traitement logique dans une unité électronique de régulation, commandent la force de freinage lorsque des valeurs-seuils prédéterminées sont atteintes et déclenchent en même temps l'arrivée d'une quantité dosée d'un lubrifiant provenant de bâtonnets lubrifiants de consistance solide, mobiles axialement, dispositif caractérisé par le fait que les bâtonnets lubrifiants (9) sont guidés dans des orifices (8) de la garniture de frein (7), de préférence sur son côté d'attaque, et du support de garniture (6) correspondant et qu'après déclenchement d'une impulsion ils sont pressés contre le disque de frein (1) par un fluide de pression agissant en fonction de cette impulsion.

2. Dispositif selon revendication 1, caractérisé par le fait que les bâtonnets lubrifiants (9) sont disposés de préférence sur deux rangées entre lesquelles se trouve placée une conduite d'amenée (11) du fluide de pression de telle manière qu'elle coupe tous les orifices (8) prévus pour les bâtonnets lubrifiants.

3. Dispositif selon revendication 1 ou 2, caractérisé par le fait qu'une impulsion ouvre une valve de commande dans un système pneumatique, laquelle, par le canal de conduites pneumatiques et de conduites d'amenée (11) dans le support de garniture (6), exerce une pression sur la face opposée au disque de frein (1) des bâtonnets lubrifiants (9).

4. Dispositif selon revendication 3, caractérisé par le fait que sur la face opposée au disque de frein (1) d'un bâtonnet lubrifiant (9) est placée une rondelle élastique (13) grâce à des languettes (14) partant radialement de cette rondelle, lesquelles languettes (14), présentant une tension initiale au lieu d'avoir du jeu comme le bâtonnet lubrifiant même (9), reposent élastiquement dans l'orifice (8).

5. Dispositif selon revendication 4, caractérisé par le fait que la rondelle élastique (13) présente en son centre un évidement (15) avec des prolongements en pointe (16) s'avançant radialement dans les languettes (14) et dans lesquels est enfichable un prolongement taillé (12) placé sur le bâtonnet lubrifiant (9).

Fig. 1

Fig. 2

0 005 700

Fig. 3

Fig. 4